**Europäisches Patentamt**

**European Patent Office**

**Office européen des brevets**

(19)

(11) Veröffentlichungsnummer : **0 151 259**
**B1**

(12) **EUROPÄISCHE PATENTSCHRIFT**

(45) Veröffentlichungstag der Patentschrift :
09.11.88

(21) Anmeldenummer : **84114901.6**

(22) Anmeldetag : **07.12.84**

(51) Int. Cl.⁴ : **G 11 B 17/038**, G 11 B 33/14,
G 11 B 23/03

(54) **Magnetplattenspeicher met durch eine Membranfeder verspannten Lagern eines beidseitig gelagerten Plattenstapels.**

(30) Priorität : **07.02.84 DE 3404196**

(43) Veröffentlichungstag der Anmeldung :
**14.08.85 Patentblatt 85/33**

(45) Bekanntmachung des Hinweises auf die Patenterteilung : **09.11.88 Patentblatt 88/45**

(84) Benannte Vertragsstaaten :
**AT CH DE FR GB IT LI NL**

(56) Entgegenhaltungen :
EP-A- 0 064 731
US-A- 3 553 663
US-A- 4 315 288
MINI-MICRO SYSTEMS, Band 30, Nr. 2, Februar 1983, Seiten 143-148, Denver, Colorado, US; J. SWARTZ: "Motor in spindle gives micro-Winchester room for 140M bytes"
JAPAN TELECOMMUNICATIONS REVIEW, Band 24, Nr. 2, April 1982, Seiten 163-169, Tokyo, JP; R. KANEKO et al.: "Compact, high recording density magnetic disk storage"

(73) Patentinhaber : **Siemens Aktiengesellschaft Berlin und München**
**Wittelsbacherplatz 2**
**D-8000 München 2 (DE)**

(72) Erfinder : **Dierkes, Albert, Dipl.-Ing. (FH)**
**Galileistrasse 10**
**D-8033 Planegg (DE)**
Erfinder : **Biermeier, Johann, Dipl.-Ing (FH)**
**Joergstrasse 82**
**D-8000 München 21 (DE)**
Erfinder : **Brand, Wilhelm, Dipl.-Ing. (FH)**
**Turnerweg 21 B**
**D-8200 Rosenheim (DE)**
Erfinder : **Olbrich, Otto, Dipl.-Ing.**
**Birkenstrasse 39**
**D-8028 Taufkirchen (DE)**

EP 0 151 259 B1

## Beschreibung

Die Erfindung bezieht sich auf einen Magnetplattenspeicher gemäß dem Oberbegriff des Hauptanspruches.

Bei Magnetplattenspeichern unterscheidet man gewöhnlich zwischen Festplattenspeichern und Wechselplattenspeichern. Die technische Entwicklung geht weiterhin ständig zu höheren Speicherkapazitäten, einerseits sowohl hinsichtlich der Spurdichte und der Bitdichte als Charakteristik für die Speicherkapazität pro Plattenfläche, als auch hinsichtlich des mechanischen Aufbaus, um möglichst viele Magnetplatten in einem vorgegebenen Einbauraum unterzubringen. Ein Beispiel dafür ist der sogenannte 5 1/4 Zoll Festplattenspeicher, dessen Magnetplatten nach Industriestandard einen Außendurchmesser von 130 mm und einen Innendurchmesser von 40 mm aufweisen. Für diesen Speichertyp hat sich als Standard in Analogie zu den Abmessungen von konkurrierenden Floppy Disk Laufwerken ein Einbauraum mit einer Einbauhöhe von 82,5 mm und einer Grundfläche von 146 × 203 mm als Einheitsgröße herausgebildet, der für das gesamte Gerät einschließlich Gehäuse und die zugehörige Elektronik zur Verfügung steht.

Dem Entwicklungsziel nach höheren Speicherkapazitäten ordnet sich, neben dem Bemühen, die Auszeichnungsdichte auf den Magnetplatten selbst zu erhöhen, das Bestreben unter, möglichst viels Magnetplatten in diesem vorgegebenen Einbauraum unterzubringen. Im Sinne dieses konstruktiven Bestrebens sind Ausführungen von 5 1/4 Zoll Festplattenspeichern bekannt geworden, bei denen der Antriebsmotor für den Plattenstapel soweit miniaturisiert und derart konstruktiv ausgelegt ist, daß er selbst bei einem vorgegebenen Innendurchmesser der Speicherplatten von 40 mm immer noch in die Nabe des Plattenstapels einzubauen ist. Damit ist ein die Bauhöhe von konventionellen Festplattenspeichern wesentlich mitbestimmendes Element in die Nabe des Magnetplattenstapels integriert und somit die für den Plattenstapel nutzbare Einbauhöhe erweitert. Auf diese Weise sind nach heutigen Gegebenheiten der Größe der kombinierten Magnetköpfe und der Plattendicke Plattenstapel möglich geworden, die bis zu acht Magnetplatten übereinander gestapelt enthalten. Der restliche Einbauraum in Vertikalrichtung wird für das Gehäuse und die Geräteelektronik benötigt.

Wie erwähnt, ist die Aufzeichnungsdichte auf der Magnetplatte das Produkt aus Schreibdichte mal Spurdichte. Insbesondere aus der Spurdichte mit beispielsweise über 1 000 Spuren/Zoll (entspricht 400 Spuren/cm) ergibt sich für den Fall der vorliegenden Erfindung weiterhin ein wesentliches Kriterium für den konstruktiven Aufbau eines Magnetplattenspeichers. Diese hohe Spurdichte erfordert eine möglichst schwingungssteife Lagerung der Spindel des Plattenstapels in dem Gehäuse. Damit werden für diesen Speichertyp Forderungen erhoben, die bisher nur bei größeren Plattenspeichern, z. B. den 14 Zoll Plattenspeichern eine Rolle spielten.

Bei Plattenspeichern größeren Durchmessers ist es allgemein bekannt, in zum Teil sehr aufwendig ausgeführten Konstruktionen die Spindel des Plattenstapels einseitig in einer schweren Grundplatte zu lagern. Das gilt insbesondere für Wechselplattenspeicher, bei denen der Plattenstapel aus dem Magnetspeichergerät entnehmbar sein muß.

Ein Beispiel für eine Spindellagerung bei einem Wechselplattenspeicher mit einer einzigen Speicherplatte ist aus US-A-3 553 663 bekannt. An der Bodenplatte des Plattenspeichergehäuses ist das Gehäuse eines Antriebsmotors festgelegt. Der Rotor des Motors ist mit Festsitz auf einer Hohlspindel angeordnet. Die Spindel ist zweifach in dem Motorgehäuse gelagert. Zum Ausgleich von Längenänderungen der Spindel sind die beiden Spindellager in axialer Richtung verspannt. Dabei ist das obere Lager fest eingebaut, an der unteren Lagerstelle ist eine Lagerbuchse mit einem flanschartigen, federnd ausgebildeten Ansatz vorgesehen. Diese Lagerbuchse nimmt den Außenring des unteren Kugellagers mit Festsitz auf, ist mit ihrem Flansch am Motorgehäuse festgelegt und durch im Umfangsbereich des Kugellagers angreifende Druckfedern gegenüber der Bodenplatte des Motorgehäuses axial verspannt.

Dies ist ein Beispiel für axial verspannte Kugellager, hier in der Anwendung auf einen Elektromotor zum Ausgleich von Temperaturschwankungen und damit verbundenen Längenänderungen der gelagerten Spindel. Diese Motoranordnung wird in einem Wechselplattenspeicher verwendet, das bedeutet, daß die Spindel zwar zweifach, jedoch nicht beidseitig gelagert ist. Zum Auswechseln sitzt die Speicherplatte nämlich am freien, außerhalb der Lagerstellen liegenden Spindelende auf.

Andererseits sind auch Aufbauten bekannt, bei denen die Spindel in einem den Plattenstapel umschließenden, starren Gehäuse beidseitig gelagert ist. Ein Beispiel für einen derartigen Laufwerksaufbau ist aus EP-A1-0 064 731 bekannt.

Um eine möglichst schwingungssteife Spindellagerung zu erreichen, werden bei dieser beidseitigen Lagerung ein Festlager und ein Loslager verwendet und dem Loslager benachbart eine Feder vorgesehen, die beide Lager nach dem Zusammenbau so miteinander verspannt, daß eine koaxiale und möglichst spielfreie Spindelführung erzielt wird. Allerdings ist dieses Ziel nur bedingt erreichbar. Außerdem wird für den Einbau der Feder zusätzlich Einbauraum benötigt, der damit als nutzbarer Speicherraum verlorengeht.

Der vorliegenden Erfindung liegt daher die Aufgabe zugrunde, einen Magnetplattenspeicher mit einer beiseitigen Lagerung der Nabe in dem Gehäuse zu schaffen, die platzsparend gestaltet ist, eine spielfreie Befestigung der Kugellager trotz zulässiger mechanischer Toleranzen im Lagerungsaufbau herstellt und die die gewünschte Koaxialität der Kugellager ohne Justagen erreicht. Dabei soll der Aufbau konstruktiv derart ausgebildet sein, daß der Plattenstapel einschließlich der Lagerungen als Modul montiert werden kann, d. h. als eine fertige Einheit in das Gehäuse eingesetzt wird.

Diese Aufgabe wird gemäß der vorliegenden Erfindung bei dem eingangs genannten Magnetplattenspeicher mit den im Kennzeichen des Patentanspruches 1 beschriebenen Merkmalen gelöst. Diese Lösung zeichnet sich insbesondere dadurch aus, daß eine eindeutig spielfreie Spindellagerung mit Hilfe von zwei Festlagern anstelle der konventionellen Kombination von Loslager und Festlager erzielt wird, so daß das bei einem Loslager immer unvermeidliche Spiel entfällt. Bei beiden Kugellagern liegen der Innenring und der Außenring mit Festsitz an der Spindel bzw. der zugeordneten Lagerbuchse an. Als Verspannelement wird im Gegensatz zu konventionellen Lösungen nicht eine Schraubenfeder, sondern ein platzsparende Membranfeder verwendet und der dadurch gewonnene Anteil des Einbauraums kann der nutzbaren Einbauhöhe zugeschlagen werden.

Da die beiden Lagerstellen in gegenüberliegenden Wandungen einer einteiligen Tragschale des Gehäuses angeordnet sind, können diese Lagerstellen mit den dazugehörigen Paßflächen in einer Aufspannung hergestellt werden, was für das Erreichen des Zieles der Koaxialität der Spindellager von erheblicher Bedeutung ist. In diesem Zusammenhang ist es insbesondere vorteilhaft, die Membranfeder als flache Scheibe auszubilden, deren Rand mit der gehäuseseitigen Stirnfläche der zweiten Lagerbuchse verschraubt ist und die eine in axialer Richtung vorspringende, zentral angeordnete Stützplatte mit einer zentrischen Gewindebohrung aufweist. Dementsprechend ist dann in der benachbarten Wandung der Tragschale eine konzentrisch zur Spindelachse ausgerichtete Zentralbohrung vorgesehen, durch die hindurchreichend eine Verspannschraube mit der Stützplatte verschraubt ist. Dieser Aufbau der Membranfeder, sowie ihre Befestigung an der gegenüberliegenden Gehäusewand erlaubt es bei einer Ausbildung der Nabe als Hohlkörper, die zweite Lagerstelle einschließlich der Lagerbuchse und der Membranfeder im Durchmesser so schmal zu halten, daß diese Lageranordnung in den Hohlkörper der Nabe eingesetzt werden kann.

Dies wiederum ermöglicht einen montagefreundlichen Aufbau des Plattenstapels, mit einer Nabe, die an ihrem der ersten Lagerbuchse benachbarten Ende einen Bund als Anlagefläche für die äußerste der Magnetplatten aufweist, wobei die Magnetplatten, durch Zwischenstücke auf Abstand gehalten, auf die Außenfläche der Nabe aufgeschoben sind. Am anderen Ende besitzt die Nabe eine Eindrehung, in die ein Zentrieransatz eines Spannringes eingesetzt ist, der mit Befestigungsschrauben auf der zugeordneten Stirnfläche der Nabe festgelegt ist. Diese konstruktive Ausbildung ermöglicht es, gegebenenfalls eine schadhaft gewordene Speicherplatte durch Lösen des Spannringes auszuwechseln, ohne dazu einzelne Teile der Lagerstellen ausbauen zu müssen.

Gemäß einer weiteren Weiterbildung kann dieser Spannring zugleich als eine erste Auswuchtscheibe Verwendung finden, wobei an dem der ersten Lagerbuchse zugeordneten Ende der Spindel konzentrisch eine zweite Auswuchtscheibe festgelegt sein kann. Damit ist ein Auswuchten des Plattenstapels in zwei Ebenen jeweils nahe der entsprechenden Lagerstelle möglich, so daß für optimale Gleichlaufeigenschaften der Nabe Sorge getragen ist. Wiederum ist auch diese Anordnung der Auswuchtscheiben wartungs- und reparaturfreundlich. Wenn nach einer Reparatur gegebenenfalls ein neues Auswuchten des Plattenstapels erforderlich ist, kann es sich als zweckmäßig erweisen, die gebrauchten Auswuchtscheiben durch neue Scheiben zu ersetzen, so daß beim erneuten Auswuchten früher einmal als Gewichte eingesetzte Schrauben nicht mehr stören und das Auswuchten zusätzlich erschweren. Außerdem ist die Anordnung der Auswuchtscheiben in den beiden Ebenen so getroffen, daß ein risikoloses Arbeiten beim Auswuchten ermöglicht wird, was insbesondere im Hinblick auf die Empfindlichkeit der Oberflächen der Speicherplatten von erheblicher Bedeutung ist.

Weitere Einzelheiten und Vorteile ergeben sich für den Fachmann aus der nachfolgenden Beschreibung eines Ausführungsbeispieles anhand der Zeichnung. Dabei zeigen

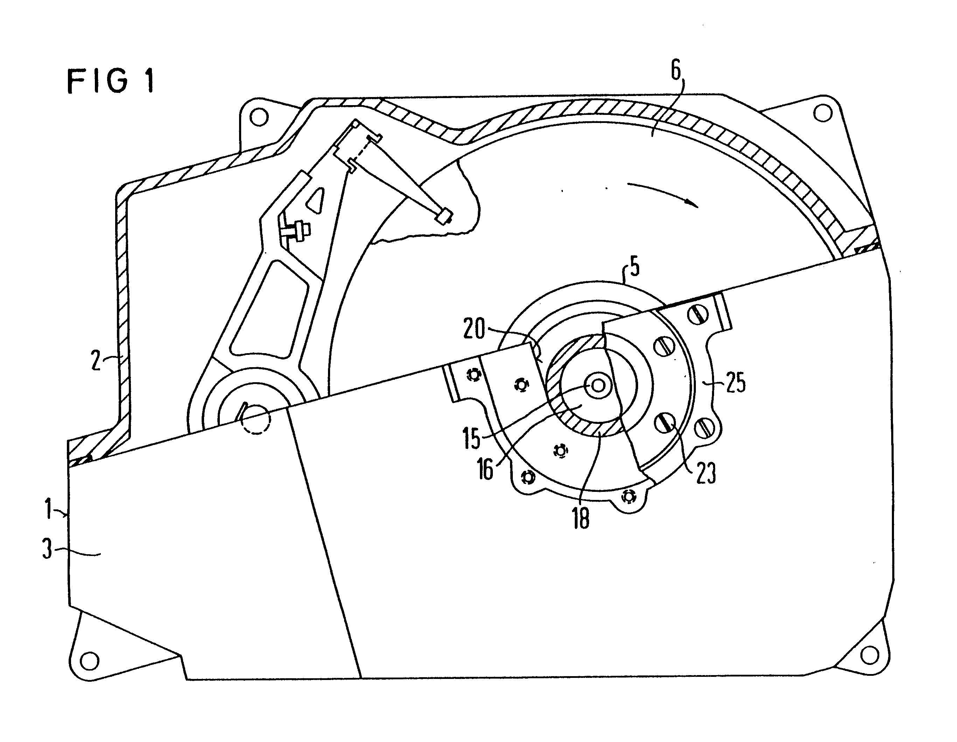

Fig. 1 und Fig. 2 den Aufbau eines gemäß der Erfindung ausgebildeten Magnetplattenspeichers in einer Seitenansicht bzw. in einem Schnitt, wobei insbesondere in der Schnittdarstellung von Fig. 2 Einzelheiten der Spindellagerung dargestellt sind ; und

Fig. 3 die Darstellung einer weiteren Ausführungsform der Spindellagerung.

Bei dem hier dargestellten Magnetplattenspeicher ist das Gehäuse, bestehend aus einer Tragschale 1 und einer schematisch angedeuteten Abdeckung 2, so geschnitten, daß beide Lagerstellen für den Magnetplattenstapel in der Bodenplatte 3 bzw. der Deckplatte 4 der Tragschale 1 angeordnet sind. Damit sind die wesentlichen tragenden Elemente des Gehäuses in einem einzigen Werkstück vereinigt. Dies ist insbesondere bedeutsam für die Herstellung, da einander zugeordnete Bohrungen bzw. Paßflächen in der Tragschale 1, insbesondere für die Ausbildung der Lagerstellen, in einer Aufspannung hergestellt werden können und somit gekettete Toleranzen vermieden sind.

In diesem Gehäuse ist ein Plattenstapel beidseitig gelagert. Der Plattenstapel enthält eine Nabe 5, die als Hohlkörper ausgebildet ist. Auf die Außenfläche dieser Nabe sind eine Mehrzahl von Magnetplatten 6 aufgeschoben und über Zwischenringe 7 auf gleichen Abstand gehalten. Die Nabe 5 besitzt am unteren Ende einen radial vorspringenden Bund 8, der als Anlagefläche für die äußerste Magnetplatte dient. Am gegenüberliegenden Ende ist ein Spannring 9 vorgesehen, der am inneren Durchmesser einen nach unten vorspringenden Ansatz 10 aufweist. Diesem zugeordnet, besitzt die Nabe 5 eine Zentriereindrehung 11, in die der Ansatz 10 des Spannringes eingreift und diesen damit auf der Stirnfläche der Nabe zentriert. Der Spannring 9 ist mit Befestigungsschrauben 12 gegen diese Stirnfläche der Nabe verspannt und legt damit die Speicherplatten 6 auf dem Nabenkörper kraftschlüssig fest.

Dieser Spannring übernimmt noch eine zweite Funktion, denn er dient zugleich als eine erste Auswuchtscheibe. Dazu sind auf seiner äußeren Randfläche eine Mehrzahl von Gewindebohrungen 13 konzentrisch angeordnet. In diese werden je nach Bedarf kleine Auswuchtgewichte während eines Auswuchtvorganges eingeschraubt.

Die Nabe 5 besitzt einen Mittelsteg 14, der auf einer umlaufenden Spindel 15 mit Festsitz festgelegt ist. Die Spindel 15 weist an jedem Ende einen Spindelzapfen auf, auf denen die Innenringe von Kugellagern 16 bzw. 17 mit Festsitz festgelegt sind. Die Außenringe dieser Kugellager wiederum tragen mit Festsitz eine erste bzw. zweite Lagerbuchse 18 bzw. 19. Beide Lagerbuchsen stehen im eingebauten Zustand des Plattenstapels still.

Die erste Lagerbuchse 18 ist in einen in die Bodenplatte 3 der Tragschale 1 eingelassenen Schlitz 20 eingesetzt, der am Grund eine 180°-Rundung aufweist. Zur Befestigung an der Bodenplatte 3 weist die erste Lagerbuchse 18 einen Flansch 21 auf, dem eine von außen in die Bodenplatte 3 eingelassene Eindrehung mit einem Bohrungsgrund 22 als Paßfläche zugeordnet ist. Dieser Flansch 21 ist mit weiteren Befestigungsschrauben 23 von außen an der Bodenplatte 3 festgelegt.

Um das Gehäuseinnere von außen her abzudichten, ist ein Dichtungsring 24 vorgesehen, der den Flansch 21 der ersten Lagerbuchse 18 umgreifend in die Eindrehung in der Bodenplatte 3 eingelegt ist und mit Hilfe eines an die Außenseite der Bodenplatte 3 angeschraubten Befestigungsringes 25 in den Bohrungsgrund 22 der Eindrehung gequetscht ist. Zur Vervollständigung der Abdichtung sind zwischen die Befestigungsschrauben 23 und die entsprechenden Dichtfläche im Flansch 21 der ersten Lagerbuchse 18 Kupferscheiben als Dichtungsringe 26 eingelegt.

Es sei darauf hingewiesen, daß die Bodenplatte 3 im Bereich der ersten Lagerbuchse aus Gründen der Raumersparnis in Richtung der Einbauhöhe, soweit noch zulässig, dünn gehalten werden muß. Um bei kurzer Gewindetiefe für die Befestigungsschrauben 23 der ersten Lagerbuchse 18 noch ausreichende Haltekräfte zu erzielen, sind Gewindeeinsätze 27 in die den Befestigungsschrauben 23 zugeordneten Sackbohrungen in der Bodenplatte 3 eingesetzt.

Die zweite Lagerbuchse 19 ist mit ausreichendem Spiel in den oberen Hohlraum der Nabe 5 eingesetzt. Auf ihrer nach außen gerichteten und der Deckplatte 4 benachbarten Stirnfläche ist eine Membranfeder 28 festgelegt. Diese kann beispielsweise aus Kupferberyllium hergestellt sein und weist eine die Federkennlinie im wesentlichen bestimmende, dünne, runde Federscheibe 29 und eine in axialer Richtung vorspringende, zentrisch angeordnete Stützplatte 30 auf. Die Stützplatte ist, um eine möglichst weiche Federkennlinie zu erzielen, an ihrem mit der Federscheibe 29 verbundenen Fußende verjüngt, was hier durch die Eindrehung 31 angedeutet ist.

Zentriert wird die Federscheibe 29 auf der zugewandten Stirnfläche der zweiten Lagerbuchse mit Hilfe einer in diese Stirnfläche eingelassenen, konzentrischen Ausnehmung 32. Die Federscheibe 29 ist mit weiteren Befestigungsschrauben 33, die in axialer Richtung in die Lagerbuchse 19 eingeschraubt sind, festgelegt. Um eine in Umfangsrichtung gleichmäßige Einspannung zu erreichen, ist zwischen der Federscheibe 29 und diese Befestigungsschrauben 33 ein Druckring 34 eingelegt.

Andererseits ist die Membranfeder 28 über ihre Stützplatte 30 an der Innenseite der Deckplatte 4 der Tragschale 1 festgelegt. Dazu ist konzentrisch zu der Spindelachse in die Deckplatte 4 eine Bohrung 35 eingelassen, die auf der Innenseite der Deckplatte 4 eine Zentriereindrehung 36 größeren Durchmessers aufweist. Dieser Durchmesser ist so gewählt, daß er dem äußeren Durchmesser der Stützplatte 30 entspricht. Zur Befestigung besitzt die Membranfeder 28 eine durch die Stützplatte 30 hindurchführende zentrale Gewindebohrung, die eine von außen in die Deckplatte 4 eingesteckte Spannschraube 37 aufnimmt. Beim Einsetzen des fertig montierten Plattenstapels in die Tragschale 1 wird die obere Lagerstelle des Plattenstapels lediglich mit dieser Spannschraube 37 an der Deckplatte 4 festgelegt. Beim Einschrauben der Spannschraube wird der Kopf der Stützplatte 30 in die Zentriereindrehung 36 hineingezogen und damit die Membranfeder 28 zentriert und gespannt.

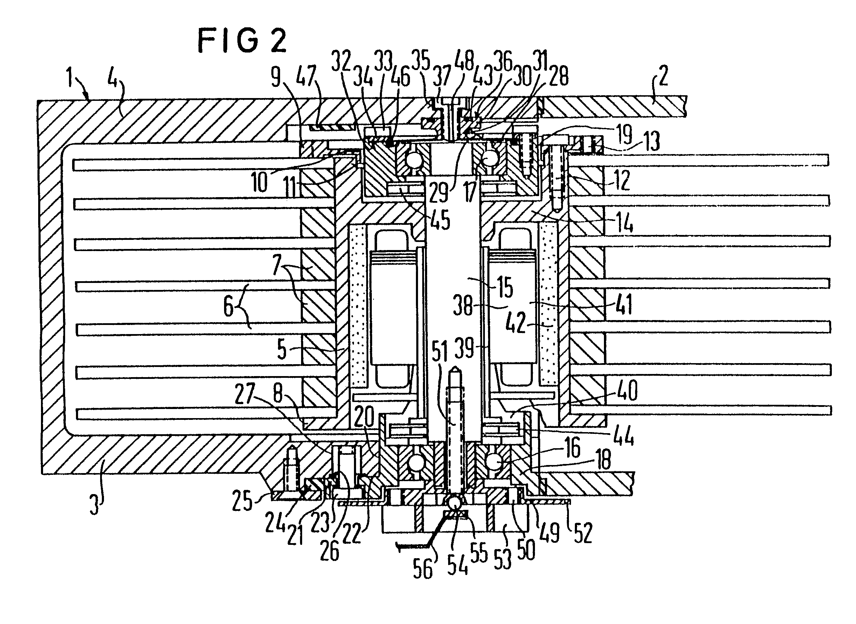

Dieses Spannen der Membranfeder wiederum bedingt, daß die beiden Kugellager 16 und 17 in der in Fig. 2 aus Gründen der Übersichtlichkeit übertrieben gezeichneten Position verspannt werden. Aufgrund der Federkraft der gespannten Membranfeder 28 wird die zweite Lagerbuchse 19 in axialer Richtung nach außen gezogen, so daß sich der Außenring des zweiten Kugellagers 17 axial gegenüber dem Innenring dieses Kugellagers verschiebt. Damit ist dieses Lager in axialer Richtung verspannt und als Folge davon wird die Spindel 15 zusammen mit der gesamten Nabe 5 und ihren Anbauteilen ebenso axial in Richtung auf die Deckplatte 4 bewegt. Mit dieser Spindelverschiebung tritt dann die entsprechende axiale Verspannung des ersten Kugellagers 16 ein. Denn der Innenring dieses Kugellagers verschiebt sich zusammen mit der Spindel 15, während der Außenring mit Festsitz in der starr angeordneten ersten Lagerbuchse 18 festgelegt ist.

In dem Hohlraum der Nabe 5 zwischen dem Mittelsteg 14 und der ersten Lagerbuchse 18 ist ein Antriebsmotor 38 für den Plattenstapel angeordnet. Sein feststehender Stator 39 ist in ausreichendem Abstand über die Spindel 17 geschoben und mit einem ringförmigen Befestigungsfuß 40 mit Festsitz in das obere Ende der ersten Lagerbuchse 18 eingepaßt. Dieser Stator trägt eine Statorwicklung 41. Die Stromzuführung zu dieser Wicklung erfolgt über nicht dargestellte Kabel, die durch eine Öffnung hindurch zugeführt werden, die sich aus den unterschiedlichen Durchmessern der Nabeninnenfläche und der Außenfläche der ersten Lagerbuchse 18 ergibt. Der wicklungslose Rotor 42 des Innenmotors wird von Permanentmagneten gebildet, die die Statorwicklung 42 mit Abstand umschließend auf der Innenfläche der Nabe 5 festgelegt sind.

Für den ordnungsgemäßen Betrieb des Magnetplattenspeichers ist es von außerordentlicher Wichtigkeit, daß der Innenraum des Gehäuses staubfrei gehalten wird. Bei den heute gebräuchlichen Aufzeichnungsdichten einerseits, und der dabei erforderlichen außerordentlich exakten räumlichen Zuordnung von Magnetplatten und hier nicht dargestellten Magnetköpfen andererseits, können bereits kleinste Staubteilchen unzulässige Störungen im Betrieb hervorrufen. Im Zusammenhang mit der Beschreibung der Lagerstelle in der Bodenplatte 3 wurde daher bereits darauf hingewiesen, daß die Dichtungsfläche zwischen der Bodenplatte 3 und der ersten Lagerbuchse 18 durch die Dichtung 24 in Zusammenwirken mit den Dichtungsscheiben 26 zusätzlich abgedichtet ist. In ähnlicher Weise ist die gegenüberliegende Lagerstelle geschützt. Die Kopffläche der Stützplatte 30 weist eine ringförmige Nut auf, in die ein weiterer Dichtungsring 43 eingelegt ist, der damit die Bohrung 35 in der Deckplatte 4 abdichtet.

Darüber hinaus muß aber auch vermieden werden, daß Schmutzteilchen, die von Schmierung und möglichem Abrieb der Kugellager 16 bzw. 17 herrühren, in den Innenraum des Magnetplattenspeichers gelangen. Aus diesem Grund ist, jeweils den Kugellagern 16, 17 benachbart, am inneren Ende der Lagerbuchsen 18, 19 eine magnetische Flüssigkeitsdichtung 44 bzw. 45 vorgesehen. Solche Flüssigkeitsdichtungen sind handelsübliche Zubehörteile und bedürfen daher keiner weiteren Erläuterung.

Die der Bodenplatte 3 zugeordnete Lagerstelle ist damit vollständig gegenüber dem Innenraum des Magnetplattenspeichers abgeschottet. Daß das entsprechende Kugellager 16 über Kanäle mit der Umgebung in Verbindung steht, spielt in diesem Zusammenhang keine Rolle und ist sogar erwünscht, wie noch zu erläutern sein wird. Anders ist dies jedoch bei der der Deckplatte 4 zugeordneten Lagerstelle. Während diese Lagerstelle nach unten hin durch die erwähnte magnetische Flüssigkeitsdichtung 45 abgedeckt ist, könnte eine rein metallische Dichtfläche zwischen der Federscheibe 29 und der Stirnfläche der zweiten Lagerbuchse 19 möglicherweise noch nicht ausreichen. Deshalb ist in diese Stirnfläche eine konzentrische Ringnut eingelassen, in die ein weiterer Dichtungsring 46 eingelegt ist. Der Durchmesser für diese Ringnut bzw. den eingelegten Dichtungsring 46 ist so gewählt, daß dieser Dichtungsring im Bereich des Druckringes 34 liegt, damit wird eine eindeutige Dichtungsfläche zwischen der zweiten Lagerbuchse 19 und der Federscheibe 29 erzielt.

Das Problem der staubfreien Abdichtung des Gehäuseinnenraumes ist so gravierend, daß üblicherweise auch Vorkehrungen getroffen werden müssen, um in extremen Situationen eine zu hohe Druckdifferenz zwischen dem Innenraum des Magnetplattenspeichers und der Umgebung zu vermeiden. In der Deckplatte 4 ist schematisch ein in einer Durchgangsbohrung angeordnetes Luftfilter 47 angedeutet. Dieses dient dazu, einen Druckausgleich herbeizuführen, so daß niemals hohe Druckdifferenzen auftreten können, die die nach außen wirkenden Abdichtungen funktionsunfähig werden lassen.

In diesem Zusammenhang ist nun darauf hinzuweisen, daß zwar die der Bodenplatte 3 zugeordnete Lagerstelle, wie oben angedeutet, mit der Umgebung in Verbindung steht, jedoch wäre das zweite Kugellager 16, soweit bisher beschrieben, von der Umgebung völlig abgeschottet. Ein sich im Bereich dieses Kugellagers aufbauender Überdruck könnte jedoch die zugeordnete magnetische Flüssigkeitsdichtung 45 unwirksam werden lassen. Um nun einen solchen Fehler zu vermeiden, wird auch dieses Kugellager direkt mit der äußeren Umgebung des Magnetplattenspeichers über einen Luftkanal verbunden. Dieser wird dadurch hergestellt, daß in der durch die Membranfeder 28 hindurchreichenden Spannschraube 37 eine Entlüftungsbohrung 48 vorgesehen ist.

Im Zusammenhang mit dem Aufbau des Plattenstapels wurde bereits erläutert, daß der Spannring 9 zugleich als Auswuchtscheibe ausgebildet ist. Dementsprechend ist eine zweite Auswuchtscheibe 49 dem ersten Kugellager 16 benachbart angeordnet. Diese zweite Auswuchtscheibe besitzt einen Zentrieransatz, der auf den entsprechenden Zapfen der Spindel 15 aufgesetzt und damit koaxial zur Spindel festgelegt ist. Befestigt ist die Auswuchtscheibe auf dem Spindelzapfen mit Hilfe einer zentral eingeschraubten, weiteren Befestigungsschraube 51. Auf dem Scheibenumfang sind wiederum Gewindebohrungen 50 gleichmäßig verteilt angeordnet, in die beim Auswuchten wahlweise Ausgleichgewichte eingeschraubt werden.

Auch diese Auswuchtscheibe kann für die Realisierung einer weiteren Funktion herangezogen werden. Im normalen Betrieb des Magnetplattenspeichers « fliegt » bekanntlich ein Magnetkopf in sehr geringem Abstand über die ihm zugeordneten Oberfläche einer Magnetplatte 6 aufgrund eines Luftpolsters, das sich als Folge der großen Relativgeschwindigkeit zwischen Magnetkopf und Plattenoberfläche bildet. Sobald diese Relativgeschwindigkeit abnimmt, droht dieses Luftpolster zusammenzubrechen und der Magnetkopf landet auf der Plattenoberfläche. Dabei ist die Gefahr einer Verletzung der Plattenoberfläche außerordentlich groß. Deshalb muß dafür Sorge getragen werden, daß der Bereich niedriger Relativgeschwindigkeiten sehr schnell durchlaufen wird. Aus diesem Grund ist es zweckmäßig, eine mechanische Bremse vorzusehen, die den Plattenstapel beim Auslaufen sehr schnell zum Stillstand bringt. Die zweite Auswuchtscheibe 49 besitzt daher einen breiten Flansch 52, der als Scheibe einer im übrigen nicht näher dargestellten Scheibenbremse dient.

Darüber hinaus kann auf diese zweite Auswuchtscheibe nach außen ragend noch ein Ventilatorrad 53 aufgesetzt sein, das zur Kühlung von hier nicht dargestellten Baugruppen dient, die in Höhe dieses Ventilatorrades angeordnet, an der Bodenplatte 3 befestigt sind.

Schließlich ist es bekanntlich wünschenswert, einen möglichst guten Erdungskontakt für die Nabe 5 und damit den gesamten Plattenstapel herzustellen. Ein solcher Erdungskontakt kann dadurch erzielt werden, daß in den Kopf der Befestigungsschraube 51 eine Kugel 54 eingelegt ist, auf der sich ein Kohleplättchen 55 unter Federdruck abstützt. Dieses Kohleplättchen ist, wie angedeutet, an eine Erdungsleitung 56 angeschlossen.

In dem oben beschriebenen Ausführungsbeispiel ist eine Verspannung der Lager der Spindel 15 des Plattenstapels mit Hilfe einer Membranfeder 28 vorgestellt, die an ihrem Umfang an der Stirnfläche der zweiten Lagerbuchse 19 festgelegt ist und über eine zentral angeordnete Stützplatte 30 mit der benachbarten Deckplatte 4 der Tragschale 1 verschraubt ist. Ebenso ist es natürlich denkbar, die Membranfeder in umgekehrter Richtung zu verspannen.

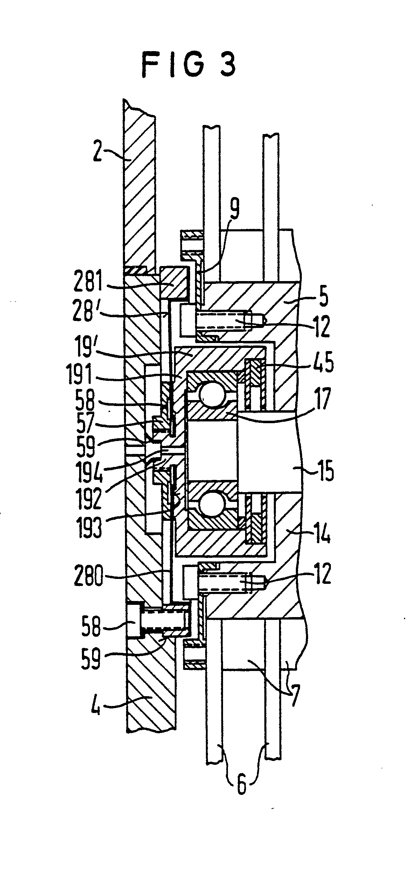

Als ein mögliches Beispiel ist in Fig. 3 eine weitere Ausführungsform dieser Lagerverspannung dargestellt, wobei diese Figur lediglich ein Ausschnitt mit dieser Lagerstelle gezeigt ist. Alle übrigen Einzelheiten entsprechen der ersten Ausführungsform und können unmittelbar aus dem in Fig. 2 dargestellten Schnitt entnommen werden. In Fig. 3 sind alle Elemente, die unverändert erhalten bleiben, mit identischen Bezugszeichen versehen, während abgewandelte Bauteile zusätzlich mit einem Strich (') bezeichnet sind, um jeweils den Bezug zwischen gleichartigen Bauteilen herzustellen.

Der Aufbau des Plattenstapels mit der auf der Spindel 15 festsitzenden Nabe 5, auf der die Magnetplatten 6 angeordnet und durch den Spannring 9 festgelegt sind, bleibt unverändert. Ebenso sitzt weiterhin das zweite Kugellager auf einem Zapfen der Spindel 15 mit Festsitz auf. Die Form der auf den Außenring des Kugellagers 17 aufgeschobenen zweiten Lagerbuchse 19' ist der geänderten Funktion angepaßt, trägt aber wiederum dem Kugellager 17 benachbart die magnetische Flüssigkeitsdichtung 45.

Im Gegensatz zur ersten Ausführungsform ist diese Lagerbuchse nun jedoch als Hohlkörper ausgebildet, der das zweite Kugellager 17 von drei Seiten umschließt. Die Stirnwand 191 der Lagerbuchse 19' ist von der Innenseite her so gestaltet, daß das Kugellager bis zum Grund der Bohrung der Lagerbuchse eingeschoben werden kann. Die Außenseite dieser Stirnwand ist als Anlagefläche für die Membranfeder 28' ausgebildet. In dieser Ausführungsform ist die Membranfeder nun zentral an der Lagerbuchse 19' befestigt. Dazu weist die Stirnwand 191 einen nach außen vorspringenden zentral zur Spindelachse liegenden Gewindezapfen 192 mit einer Zentralbohrung 194 auf. Außerdem ist auf der Außenseite der Stirnwand 191 ein vorspringender konzentrischer Ansatzring 193 vorgesehen, der die Anlagefläche für die Federscheibe 280 der Membranfeder 28' bildet. Eine Spannmutter 57 ist auf den Gewindezapfen 192 der zweiten Lagerbuchse 19' aufgeschraubt. Sie besitzt eine Eindrehung auf der der Lagerbuchse 28' zugekehrten Innenseite, damit wird erreicht, daß die Spannmutter 57 mit ihrem Umfang eindeutig die Federscheibe 280 der Membranfeder 28' auf dem Ansatzring 193 der zweiten Lagerbuchse 19' kraftschlüssig festlegt. Andererseits muß nun der Umfang der Membranfeder 28' an der Innenseite der Deckplatte 4 festgelegt werden. In Abwandlung der ersten Ausführungsform der Membranfeder ist hier nun ein Befestigungsring 281 vorgesehen, der mit dem federnden Mittelteil, d. h. der Federscheibe 280 fest verbunden ist.

Eine solche Membranfeder kann in unterschiedlicher Weise hergestellt werden. Eine Möglichkeit besteht darin, die Membranfeder aus einem Stück Kupferberyllium z. B. als Drehteil herzustellen. In diesem Fall ist dann die Membranfeder 28' ein einteiliges federndes Element. Jedoch könnten der Befestigungsring 281 und die Federscheibe 280 auch zwei getrennte Bauteile sein. In diesem Fall ist es zweckmäßig, wie in Fig. 3 angedeutet, die Federscheibe 280 am äußeren Umfang abzukröpfen, den Befestigungsring 281 auf den Rand aufzuschieben und dort durch die bekannten Verfahren wie z. B. Hartlöten, Schweißen oder Kleben festzulegen.

Der Befestigungsring 281 trägt an seinem Umfang verteilt Gewindelöcher, in die durch zugeordnete Bohrungen in der Deckplatte 4 hindurchreichende weitere Spannschrauben 58 eingeschraubt sind. Dabei ist der Befestigungsring 281 in einer in die Innenwand der Deckplatte 4 eingelassenen Eindrehung 59 zentriert.

Schließlich ist noch darauf hinzuweisen, daß das zweite Kugellager 17 auch bei dieser Ausführungsform mit der Umgebung durch einen Druckausgleichskanal unmittelbar in Verbindung steht. Dies wird durch eine zentrale Bohrung in der Deckplatte 4 in Zusammenwirken mit der Zentralbohrung 194 erreicht. Außerdem weist die Innenseite der zweiten Lagerbuchse 19' eine geringfügige Eindrehung auf, die einen Teil dieses Luftkanals bildet. Dieser Luftkanal muß jedoch gegenüber dem Innenraum des Magnetplattenspeichers hermetisch abgedichtet sein. Deswegen ist in die Stirnfläche der Spannmutter 57 eine trichterförmige Dichtung 59 eingesetzt, die sich beim Verspannen der Membranfeder 28' mit ihrem Rand an die Innenfläche der Deckplatte 4 dichtend anlegt.

In den beiden vorstehend beschriebenen Ausführungsbeispielen ist eine beidseitige Lagerung für die Nabe eines Magnetplattenstapels in einer einteiligen Tragschale beschrieben, bei der eine Membranfeder zwischen der einen Lagerstelle und der benachbarten Gehäusewandung angeordnet ist und die notwendige Verspannkraft aufbringt, um die Kugellager in axialer Richtung spielfrei zu verspannen. Die beiden Ausführungsbeispiele zeigen zwei Anordnungsformen einer solchen Membranfeder und zielen darauf ab, die grundsätzlichen Möglichkeiten für die Verwirklichung dieser Verspannungsfunktion zu erläutern. Im Rahmen der vorliegenden Aufgabenstellung und der erläuterten Lösung sind allerdings durchaus weitere Ausführungsmöglichkeiten gegeben, die trotz einer konstruktiven Abwandlung der Membranfeder und der Art ihrer Befestigung jedoch vom Funktionsprinzip her einer dieser beiden beschriebenen Ausführungsformen nahekommen werden. Es bleibt dem Fachmann vorbehalten, welchem Funktionsprinzip er im gegebenen Anwendungsfall den Vorzug geben will.

**Patentansprüche**

1. Festplattenspeicher mit einer in einer einteiligen Tragschale eines Gehäuses beidseitig gelagerten, mindestens eine Magnetspeicherplatte tragenden und durch einen Motor (38) angetriebenen Nabe (5), die auf einer umlaufenden Spindel (15) festgelegt ist, wobei zur Lagerung der Spindel an einander gegenüberliegenden Wandungen der Tragschale ein Paar von Kugellagern vorgesehen ist, die zum Erzielen einer spielfreien Spindelführung in axialer Richtung verspannt sind, dadurch gekennzeichnet, daß jedem Kugellager (16, 17), die mit ihren Innenringen mit Festsitz auf der Spindel (15) festgelegt sind, je eine Lagerbuchse (18 bzw. 19) zugeordnet ist, die ebenfalls mit Festsitz auf dem Außenring des entsprechenden Kugellagers aufsitzt, daß die eine dieser beiden Lagerbuchsen (18) in der zugewandten Wandung (3) der Tragschale (1) fest angeordnet ist und daß die andere Lagerbuchse (19) dadurch federnd und im eingebauten Zustand der Nabe (5) in axialer Richtung vorgespannt an der gegenüberliegenden Wandung (4) der Tragschale festgelegt ist, daß als alleinig vorspannendes Element eine koaxial zur Achse der Spindel (15) angeordnete Membranfeder (28) vorgesehen ist, die im eingebauten Zustand der Nabe (5) unter Vorspannung stehend unmittelbar an der zweiten Lagerbuchse (19) einerseits und an der benachbarten Wandung (4) der Tragschale (1) andererseits festgelegt ist.

2. Magnetplattenspeicher nach Anspruch 1, dadurch gekennzeichnet, daß die Membranfeder (28') einen Befestigungsring (281) aufweist, der eine runde Federscheibe (280) verspannend umfaßt, wobei die Federscheibe zentral an der Stirnfläche der zweiten Lagerbuchse (19') und der Befestigungsring an der Innenseite der benachbarten Wandung (4) der Tragschale (1) jeweils zentriert und entgegen der Federkraft der Membranfeder festgelegt sind.

3. Magnetplattenspeicher nach Anspruch 1, dadurch gekennzeichnet, daß die Membranfeder (28) als runde Federscheibe (29) ausgebildet ist, deren Rand mit der gehäuseseitigen Stirnfläche der zweiten Lagerbuchse (19) verschraubt ist und deren Zentrum entgegen der Verspannkraft an der benachbarten Wandung (4) der Tragschale (1) festgelegt ist.

4. Magnetplattenspeicher nach Anspruch 3, dadurch gekennzeichnet, daß die Membranfeder (28) eine in axialer Richtung vorspringende, zentral angeordnete Stützplatte (30) mit einer zentrischen Gewindebohrung aufweist und konzentrisch zur Achse der Spindel (15) an der zugewandten Wandung (4) der Tragschale (1) eine Zentralbohrung (35) vorgesehen ist, durch die hindurchreichend eine Spannschraube (37) mit der Stützplatte verschraubt ist.

5. Magnetplattenspeicher nach Anspruch 4, dadurch gekennzeichnet, daß die Membranfeder (28) aus Kupferberyllium hergestellt ist und zum Erzielen einer flachen Federkennlinie eine Eindrehung (31) am auf der Federscheibe (29) aufsitzenden Fuß der Stützplatte (30) aufweist.

6. Magnetplattenspeicher nach Anspruch 4, dadurch gekennzeichnet, daß die Zentralbohrung (35) in der Wandung (4) der Tragschale (1) auf der Gehäuseinnenseite mit einer Zentriereindrehung (36) versehen ist, die dem Durchmesser des Stützplatte (30) angepaßt, diese beim Verspannen der Membranfeder (28) aufnimmt.

7. Magnetplattenspeicher nach einem der Ansprüche 3 bis 6, dadurch gekennzeichnet, daß die zweite Lagerbuchse (19) auf der gehäuseseitigen Stirnfläche eine konzentrisch zur Achse der Spindel (15) ausgebildete Ausnehmung (32) vom Durchmesser der Federscheibe (29) aufweist, die diese Federscheibe zentrierend aufnimmt und daß ein Druckring (34) mit diesem Durchmesser über den Rand der Federscheibe gelegt und mit der zweiten Lagerbuchse verschraubt ist.

8. Magnetplattenspeicher nach Anspruch 7, gekennzeichnet durch einen Dichtungsring (46), der in einer in der gehäuseseitigen Stirnfläche der zweiten Lagerbuchse (19) vorgesehenen Nut unterhalb der Membranfeder (28) zum Abdichten des Plattenspeicherinnenraumes gegenüber dem zugeordneten Kugellager (17) angeordnet ist und durch einen weiteren Dichtungsring (43), der zwischen der Kopffläche der Stützplatte (30) und der Zentriereindrehung (36) der Zentralbohrung (35) eingelegt ist.

9. Magnetplattenspeicher nach Anspruch 8, dadurch gekennzeichnet, daß die Spannschraube (37) zum Festlegen der Membranfeder (28) als Hohlschraube ausgebildet ist und durch die Membranfeder hindurchreichend damit einen Druckausgleichskanal zwischen dem abgedichteten Raum des zugeordneten Kugellagers (17) und der Umgebung des Magnetplattenspeichers bildet.

10. Magnetplattenspeicher nach einem der Ansprüche 1 bis 9, dadurch gekennzeichnet, daß die Nabe (5) als Hohlkörper mit einem Mittelsteg (14) ausgebildet ist, in dem die Spindel (15) zentrisch mit Festsitz geführt ist, daß in dem von der Nabeninnenfläche gebildeten Hohlraum der Antriebsmotor (38) so angeordnet ist, daß sein Rotor (42) mit der Nabeninnenfläche starr gekoppelt ist und sein Stator (39) am nach innen stehenden Ende der ersten Lagerbuchse (18) festgelegt ist.

11. Magnetplattenspeicher nach Anspruch 10, dadurch gekennzeichnet, daß die dem Hohlkörper der Nabe (5) zugewandten inneren Enden der beiden Lagerbuchsen (18, 19) dem entsprechenden Kugellager (16 bzw. 17) benachbart, je eine magnetische Flüssigkeitsdichtung (44) bzw. (45) tragen, die den Innenraum des Gehäuses zur betreffenden Lagerstelle abdichten.

12. Magnetplattenspeicher nach einem der Ansprüche 1 bis 11, dadurch gekennzeichnet, daß eine Zentrierbohrung (20) zum Lagern der ersten Lagerbuchse (18) in der Tragschale (1) als ein zum Rand der Tragschale hin geöffneter Schlitz mit einer 180°-Rundung am inneren Ende ausgebildet ist.

13. Magnetplattenspeicher nach Anspruch 12, dadurch gekennzeichnet, daß die Tragschale (1) auf der Außenfläche konzentrisch zu der 180°-Rundung eine Eindrehung (22) aufweist, die als Paßfläche für einen Flanschansatz (21) der ersten Lagerbuchse (18) dient.

14. Magnetplattenspeicher nach Anspruch 13, dadurch gekennzeichnet, daß dieser Flanschansatz (21) der ersten Lagerbuchse (18) an seinem Umfang konzentrisch angeordnete Bohrungen und die benachbarte Wandung (4) der Tragschale (1), diesen Bohrungen zugeordnet, Gewindelöcher zum Aufnehmen von Befestigungsschrauben (23) für die erste Lagerbuchse aufweisen.

15. Magnetplattenspeicher nach einem der Ansprüche 10 bis 15, dadurch gekennzeichnet, daß die Nabe (5) am der ersten Lagerbuchse (18) benachbarten Ende einen Bund (8) als Anlage für die äußerste der Magnetplatten (6) aufweist, daß die Magnetplatten, durch Zwischenstücke (7) auf Abstand gehalten, auf die Außenfläche der Nabe aufgeschoben sind, daß die Nabe am anderen Ende eine Zentriereindrehung (11) besitzt und daß ein Spannring (9) vorgesehen ist, der mit einem Zentrieransatz (10) in diese Eindrehung der Nabe eingesetzt und mit Befestigungsschrauben (12) auf der zugeordneten Stirnfläche der Nabe festgelegt ist.

16. Magnetplattenspeicher nach Anspruch 15, dadurch gekennzeichnet, daß der Spannring (9) als eine erste Auswuchtscheibe ausgebildet ist und auf seinem Umfang gleichmäßig verteilt Gewindebohrungen (13) zum wahlweisen Einsetzen von Ausgleichgewichten besitzt.

17. Magnetplattenspeicher nach Anspruch 16, dadurch gekennzeichnet, daß die inneren Durchmesser des Spannringes (9) und der Nabe (5) größer sind als der Außendurchmesser der zweiten Lagerbuchse (19), so daß der Plattenstapel ohne Abnehmen der Lager durch Lösen des Spannringes (9) auseinandernehmbar ist.

18. Magnetplattenspeicher nach einem der Ansprüche 16 oder 17, dadurch gekennzeichnet, daß an dem der ersten Lagerbuchse (18) zugeordneten Zapfen der Spindel (15) konzentrisch eine zweite Auswuchtscheibe (49) festgelegt ist.

19. Magnetplattenspeicher nach Anspruch 18, dadurch gekennzeichnet, daß diese zweite Auswuchtscheibe (49) auf ihrer Innenfläche einen konzentrisch angeordneten Bund aufweist, der auf den Spindelzapfen aufgeschoben ist und daß eine Zentralschraube (51) vorgesehen ist, mit der diese zweite Auswuchtscheibe an dem Spindelende festgelegt ist.

20. Magnetplattenspeicher nach Anspruch 19, dadurch gekennzeichnet, daß die zweite Auswuchtscheibe einen breiten Flansch (52) aufweist, der als Bremsscheibe für eine mechanische Bremse dient.

21. Magnetplattenspeicher nach Anspruch 19 oder 20, dadurch gekennzeichnet, daß die zweite Auswuchtscheibe (49) auf ihrer Außenfläche ein Ventilatorrad (53) trägt.

22. Magnetplattenspeicher nach einem der Ansprüche 19 bis 21, dadurch gekennzeichnet, daß der Kopf der Zentralschraube (51) zum Befestigen der zweiten Auswuchtscheibe (49) als Erdungskontaktfläche ausgebildet ist und daß ein geerdetes Kohleplättchen (55) vorgesehen ist, das sich unter Federdruck auf dieser Kontaktfläche abstützt.

23. Magnetplattenspeicher nach Anspruch 22, dadurch gekennzeichnet, daß in den Kopf der Zentralschraube (51) eine Kugel (54) eingelegt ist, die diese Erdungskontaktfläche bildet.

## Claims

1. A fixed disc storage unit with a hub (5) which is mounted at both sides in a one-piece supporting shell of a housing, carries at least one magnetic storage disc and is driven by a motor (38), said hub (5) being fixed on a rotating spindle (15), where for mounting the spindle on opposing walls of the supporting shell, a pair of ball bearings is provided, said ball bearings being braced in an axial direction to achieve a play-free guidance of the spindle, characterised in that a bearing bush (18 and 19 respectively) is associated with each ball bearing (16, 17), said ball bearings being fixed with their inner rings with a tight fit on the spindle (15), said bearing bushes also being mounted with a tight fit on the outer ring of the corresponding ball bearing, in that one of these two bearing bushes (18) is firmly disposed in the wall (3) of the supporting shell (1) facing towards it, and in that the other bearing bush (19) is fixed in a resilient manner because of this, and then the hub (5) is in a built-in condition, pretensioned in an axial direction, on the opposing wall (4) of the supporting shell, and in that a diaphragm spring (28) is provided as the sole pretensioning element, said spring (28) being disposed coaxially to the axis of the spindle (15) and, in the built-in condition of the hub (5), being fixed, under pretension, directly on to the second bearing bush (19) on the one side and on to the adjacent wall (4) of the supporting shell (1) on the other side.

2. A magnetic disc storage unit as claimed in Claim 1, characterised in that the diaphragm spring (28') has a fastening ring (281) which encircles, in a bracing manner, a round spring washer (28), whereby the spring washer is fixed centrally on the front surface of the second bearing bush (19') and the fastening ring is fixed so that it is centred on the inside of the adjacent wall (4) of the supporting shell (1) and is against the elastic force of the diaphragm spring.

3. A magnetic disc storage unit as claimed in Claim 1, characterised in that the diaphragm spring (28) is designed as a round spring washer (29), the edge of which is bolted with the front surface, on the housing side, of the second bearing bush (19) and the centre of which is fixed opposed to the bracing force, on the adjacent wall (4) of the supporting shell (1).

4. A magnetic disc storage unit as claimed in Claim 3, characterised in that the diaphragm spring (28) has a centrally disposed support plate (30) projecting in an axial direction, with a central tapped hole, and a central bore (35) is provided concentrically to the axis of the spindle (15) on the wall (4) of the supporting shell (1) which faces towards it, through which bore (35) a clamping screw (37) which passes right through it is bolted with the support plate.

5. A magnetic disc storage unit as claimed in Claim 4, characterised in that the diaphragm spring (28) is made out of copper beryllium and in order to achieve a flat spring characteristic, has a recess (31) on the foot of the support plate (30) which is mounted on the spring washer (29).

6. A magnetic disc storage unit as claimed in Claim 4, characterised in that the central bore (35) in the wall (4) of the supporting shell (1) on the inside of the housing is provided with a centering recess (36) which, adapted to the diameter of the support plate (30), receives said plate when the diaphragm spring (28) is braced.

7. A magnetic disc storage unit as claimed in one of the Claims 3 to 6, characterised in that the second bearing bush (19) has on the front surface on the housing side, a recess (32), of the diameter of the spring washer (29) designed concentrically to the axis of the spindle (15), said recess (32) receiving this spring washer so that it is centered, and in that a thrust ring (34) with this diameter is placed over the edge of the spring washer and bolted with the second bearing bush.

8. A magnetic disc storage unit as claimed in Claim 7, characterised by a sealing ring (46) which is disposed in a groove provided in the front surface of the second bearing bush (19) on the housing side, below the diaphragm spring (28) for sealing the inner area of the disc storage unit in relation to the associated ball bearing (17) and by a further sealing ring (43) which is inserted between the head surface of the support plate (30) and the centering recess (36) of the central bore (35).

9. A magnetic disc storage unit as claimed in Claim 8, characterised in that the clamping screw (37) for fixing the diaphragm spring (28) is designed as a hollow screw and, extending through the diaphragm spring, forms with it a pressure balancing channel between the associated ball bearing (17) and the surroundings of the magnetic disc storage unit.

10. A magnetic disc storage unit as claimed in one of the Claims 1 to 9, characterised in that the hub (5) is designed as a hollow body with a centre bar (14) in which the spindle (15) is guided centrically with a tight fit, in that in the hollow chamber formed by the inner surface of the hub, the drive motor (38) is disposed in such a way that its rotor (42) is rigidly coupled with the inner surface of the hub and its stator (39) is fixed on the inwardly standing end of the first bearing bush (18).

11. A magnetic disc storage unit as claimed in Claim 10, characterised in that the inner ends of the two bearing bushes (18, 19), adjacent to the corresponding ball bearing (16, 17 respectively), which face towards the hollow body of the hub (5), each carry a magnetic liquid seal (44) and (45) respectively, which seal the inside of the housing to the respective bearing.

12. A magnetic disc storage unit as claimed in one of the Claims 1 to 11, characterised in that a centering bore (20) for mounting the first bearing bush (18) in the supporting shell (1) is designed as a slot with an 180° radius on the inner end, which is open towards the edge of the supporting shell.

13. A magnetic disc storage unit as claimed in Claim 12, characterised in that the supporting shell (1) has on the outside surface, concentric to the 180° radius, a recess (22) which serves as a fitting surface for a flanged shoulder (21) of the first bearing bush (18).

14. A magnetic disc storage unit as claimed in Claim 13, characterised in that this flanged shoulder (21) of the first bearing bush (18) has on its circumference concentrically arranged bores, and the adjacent wall (4) of the supporting shell (1) has threaded holes, associated with these bores, for receiving fixing screws (23) for the first bearing bush.

15. A magnetic disc storage unit as claimed in one of the Claims 10 to 15, characterised in that the hub (5) has on the end adjacent to the first bearing bush (18) a collar (8) as a contact for the outermost magnetic disc (6), in that the magnetic discs, kept apart by spacer pieces (7), are pushed on to the outside surface of the hub, in that the hub has on the other end a centering recess (11) and in that a clamping ring (9) is provided which is set into this recess of the hub with a centering shoulder (10) and is fixed on the associated front surface of the hub with fastening screws (12).

16. A magnetic disc storage unit as claimed in Claim 15, characterised in that the clamping ring (9) is designed as a first balancing disc and has tapped bores (13), uniformly distributed on its periphery, for the optional insertion of balancing weights.

17. A magnetic disc storage unit as claimed in Claim 16, characterised in that the inner diameters of the clamping ring (9) and of the hub (5) are larger than the outside diameter of the second bearing bush (19) so that the disc stack can be taken apart by undoing the clamping ring (9) without removing the bearings.

18. A magnetic disc storage unit as claimed in one of the Claims 16 or 17, characterised in that a second balancing disc (49) is fixed concentrically on the journal of the spindle (15) associated with the first bearing bush (18).

19. A magnetic bush storage unit as claimed in Claim 18, characterised in that this second balancing disc (49) has on its inside surface a concentrically disposed collar which is pushed on to the spindle journal and in that a central screw (51) is provided with which this second balancing disc is fixed on the end of the spindle.

20. A magnetic disc storage unit as claimed in Claim 19, characterised in that the second balancing disc has a wide flange (52) which serves as a brake disc for a mechanical brake.

21. A magnetic disc storage unit as claimed in Claim 19 or 20, characterised in that the second balancing disc (49) carries on its outside surface an impeller (53).

22. A magnetic disc storage unit as claimed in one of the Claims 19 to 21, characterised in that the head of the central screw (51) for securing the second balancing disc (49) is designed as an earth contact surface and in that a small earthed plate (55) is provided which rests against this contact surface under spring pressure.

23. A magnetic disc storage unit as claimed in Claim 22, characterised in that a ball (54), which forms this earth contact surface, is inserted into the head of the central screw (51).

**Revendications**

1. Mémoire à disques inamovibles, comprenant un moyeu (5) monté rotatif par ses deux côtés dans une cuvette de support en une seule pièce d'un boîtier, moyeu qui porte au moins un disque de mémoire magnétique, est entraîné en rotation par un moteur (38) et est fixé sur un axe tournant (15), avec prévision, pour le montage rotatif de l'axe, d'une paire de roulements à billes sur des parois mutuellement opposées de la cuvette de support, roulements qui sont mis sous tension en direction axiale en vue de l'obtention d'un guidage sans jeu de l'axe, caractérisée en ce qu'une douille de palier (18 ou 19) est coordonnée à chaque roulement à billes (16, 17), lesquels sont fixés par leurs bagues intérieures sur l'axe (15) par un ajustement serré, la douille étant également ajustée de façon serrée sur la bague extérieure du roulement correspondant, que l'une de ces deux douilles de palier (18) est disposée fixe dans la paroi (3) dirigée vers elle de la cuvette de support (1) et que l'autre douille de palier (19) est ainsi précontrainte élastiquement et en direction axiale à l'état monté du moyeu (5), avec fixation à la paroi opposée (4) de la cuvette de support, qu'un ressort à membrane (28) est prévu en tant qu'unique élément de précontrainte et est disposé sur l'axe géométrique de l'axe (15), le ressort à membrane, précontraint à l'état monté du moyeu (5), étant fixé directement à la seconde douille de palier (19) d'une part et à la paroi (4) voisine de la cuvette de support (1) d'autre part.

2. Mémoire selon la revendication 1, caractérisée en ce que le ressort à membrane (28') présente un anneau de fixation (281) qui entoure un disque de ressort (280) circulaire en le maintenant bandé, le disque étant fixé de façon centrale à la face d'extrémité de la seconde douille de palier (19') et l'anneau de fixation étant fixé au côté intérieur de la paroi (4) voisine de la cuvette de support (1), la fixation du disque de ressort et de l'anneau de fixation étant réalisée avec centrage et contre la force du ressort à membrane.

3. Mémoire selon la revendication 1, caractérisée en ce que le ressort à membrane (28) est réalisé comme un disque de ressort circulaire (29) dont le bord est fixé par vissage à la face d'extrémité côté boîtier de la seconde douille de palier (19) et dont le centre est fixé, contre la force de tension, à la paroi (4) voisine de la cuvette de support (1).

4. Mémoire selon la revendication 3, caractérisée en ce que le ressort à membrane (28) présente une plaque d'appui (30) disposée de façon centrale, faisant saillie en direction axiale et présentant un trou central taraudé, la paroi (4) dirigée vers elle de la cuvette de support (1) présentant un trou central (35) situé sur l'axe géométrique de l'axe (15) et traversé par une vis de serrage (37) vissée dans la plaque d'appui.

5. Mémoire selon la revendication 4, caractérisée en ce que le ressort à membrane (28) est en béryllium de cuivre et présente une gorge circulaire (31) sur le pied de la plaque d'appui (30), pied qui est appliqué contre le disque de ressort (29), en vue de l'obtention d'une caractéristique élastique de faible pente.

6. Mémoire selon la revendication 4, caractérisée en ce que le perçage central (35) de la paroi (4) de la cuvette de support (1) est pourvu, sur le côté intérieur du boîtier, d'un chambrage de centrage (36) qui est adapté au diamètre de la plaque d'appui (30) et qui reçoit cette plaque lors du bandage du ressort à membrane (28).

7. Mémoire selon une des revendications 3 à 6, caractérisée en ce que la seconde douille de palier (19) présente, sur la face d'extrémité côté boîtier, un évidement (32) réalisé sur l'axe géométrique de l'axe (15) et ayant le diamètre du disque de ressort (29), l'évidement recevant ce disque de ressort avec centrage, et qu'un anneau de pression (34) ayant ce diamètre est disposé par-dessus le bord du disque de ressort et est fixé par vissage à la seconde douille de palier.

8. Mémoire selon la revendication 7, caractérisée par une bague d'étanchéité (46) placée dans une rainure prévue au-dessous du ressort à membrane (28) dans la face d'extrémité côté boîtier de la seconde douille à palier (19), afin d'étancher l'espace intérieur de la mémoire à disques vis-à-vis du roulement à billes (17) coordonné, ainsi que par une autre bague d'étanchéité (43) qui est interposée entre la surface de tête de la plaque d'appui (30) et le chambrage de centrage (36) du perçage central (35).

9. Mémoire selon la revendication 8, caractérisée en ce que la vis de serrage (37) pour fixer le ressort à membrane (28) est réalisée comme une vis creuse et est disposée à travers le ressort à membrane, créant ainsi un canal d'égalisation de pression entre l'espace étanché du roulement à billes (17) coordonné et l'environnement de la mémoire à disques magnétiques.

10. Mémoire selon une des revendications 1 à 9, caractérisée en ce que le moyeu (5) est réalisé comme un corps creux pourvu d'une cloison centrale (14), dans laquelle l'axe (15) est guidé de façon centrale par un ajustement serré et que le moteur d'entraînement (38) est disposé dans la cavité formée par la surface interne du moyeu, de manière que son rotor (42) soit couplé rigidement à la surface interne du moyeu et que son stator (39) soit fixé à l'extrémité dirigée vers l'intérieur de la première douille de palier (18).

11. Mémoire selon la revendication 10, caractérisée en ce que les extrémités intérieures des deux douilles de palier (18, 19), extrémités qui sont dirigées vers le corps creux constitué par le moyeu (5), portent chacune, à proximité du roulement à billes (16 ou 17) correspondant, une garniture magnétique d'étanchéité aux liquides (44 ou 45) qui assure l'étanchéité de l'espace intérieur du boîtier vis-à-vis du palier concerné.

12. Mémoire selon une des revendications 1 à 11, caractérisée en ce qu'une ouverture de centrage (20), servant de logement pour la première douille de palier (18) dans la cuvette de support (1), est réalisée comme une échancrure qui s'ouvre dans le bord de la cuvette de support et dont l'extrémité intérieure forme un arrondi de 180°.

13. Mémoire selon la revendication 12, caractérisée en ce que la surface externe de la cuvette de support (1) présente, concentriquement à l'arrondi de 180°, un chambrage (22) qui sert de surface d'ajustage pour une saillie en forme de rebord (21) de la première douille de palier (18).

14. Mémoire selon la revendication 13, caractérisée en ce que cette saillie en forme de rebord (21) de la première douille de palier (18) présente des trous disposés concentriquement à son pourtour et que la paroi (4) voisine de la cuvette de support (1) présente des trous taraudés coordonnés auxdits trous en vue de la réception de vis de fixation (23) pour la première douille de palier.

15. Mémoire selon une des revendications 10 à 14, caractérisée en ce que le moyeu (5) présente un collet (8) en tant qu'appui pour le disque magnétique (6) extérieur à son extrémité voisine de la première douille de palier (18), que les disques magnétiques, maintenus à distance les uns des autres par des entroises (7), sont enfilés sur la surface externe du moyeu, que le moyeu possède un chambrage de centrage (11) à l'autre extrémité et qu'un anneau de serrage (9) est prévu, qui est disposé par une saillie de centrage (10) dans ce chambrage du moyeu et est fixé sur la face d'extrémité correspondante du moyeu par des vis de fixation (12).

16. Mémoire selon la revendication 15, caractérisée en ce que l'anneau de serrage (9) est réalisé comme un premier disque d'équilibrage et possède des trous taraudés (13) répartis uniformément à son pourtour pour l'insertion sélective de poids d'équilibrage.

17. Mémoire selon la revendication 16, caractérisée en ce que les diamètres intérieurs de l'anneau de serrage (9) et du moyeu (5) sont plus grands que le diamètre extérieur de la seconde douille de palier (19), de sorte que des parties de la pile de disques peuvent être retirées, après desserrage de l'anneau de serrage (9), sans enlever les paliers.

18. Mémoire selon la revendication 16 ou 17, caractérisée en ce qu'un second disque d'équilibrage (49) est fixé concentriquement au tourillon de l'axe (15) coordonné à la première douille de palier (18).

19. Mémoire selon la revendication 18, caractérisée en ce que ce second disque d'équilibrage (49) présente sur sa surface interne un collet concentrique qui est emboîté sur le tourillon de l'axe et qu'une vis centrale (51) est prévue pour fixer ce second disque d'équilibrage à l'extrémité de l'axe.

20. Mémoire selon la revendication 19, caractérisée en ce que le second disque d'équilibrage présente un large rebord (52) qui sert de disque de frein pour un frein mécanique.

21. Mémoire selon la revendication 19 ou 20, caractérisée en ce que le second disque d'équilibrage (49) porte une roue de ventilateur (53) sur sa surface externe.

22. Mémoire selon une des revendications 19 à 21, caractérisée en ce que la tête de la vis centrale (51) pour la fixation du second disque d'équilibrage (49) est réalisée comme une surface de contact pour la mise à la terre et qu'une plaquette-charbon (55) connectée à la terre est appuyée sous la pression d'un ressort sur cette surface de contact.

23. Mémoire selon la revendication 22, caractérisée en ce que la surface de contact pour la mise à la terre est formée par une bille (54) disposée dans la tête de la vis centrale (51).

FIG 1

0 151 259

FIG 2

# FIG 3